(19) Europäisches Patentamt
European Patent Office
Office européen des brevets

(11) **EP 3 131 220 B1**

(12) **EUROPEAN PATENT SPECIFICATION**

(45) Date of publication and mention
of the grant of the patent:
**28.03.2018  Bulletin 2018/13**

(51) Int Cl.:
***H04L 1/00*** (2006.01)

(21) Application number: **16182504.7**

(22) Date of filing: **03.08.2016**

(54) **METHOD AND PROCEDURES FOR AGGREGATION OF PHYSICAL LINKS BETWEEN A TRANSMITTING STATION AND A RECEIVING STATION**

METHODE UND VERFAHREN ZUR AGGREGATION VON PHYSIKALISCHEN VERBINDUNGEN ZWISCHEN EINER SENDESTATION UND EINER EMPFANGSSTATION

METHODE ET PROCEDURES POUR L'AGGREGATION DE LIENS PHYSIQUES ENTRE UNE STATION EMETTEUR ET UNE STATION RECEPTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.08.2015  IT UB20153014**

(43) Date of publication of application:
**15.02.2017  Bulletin 2017/07**

(73) Proprietor: **SIAE Microelettronica S.p.A.
20093 Cologno Monzese (MI) (IT)**

(72) Inventors:
• **MANGONE, Alessio
20093 Cologno Monzese (MI) (IT)**
• **GALLI, Giacomo
20093 Cologno Monzese (MI) (IT)**

(74) Representative: **Raimondi, Margherita et al
Dott. Ing. Prof. Alfredo Raimondi S.r.l.,
Piazzale Cadorna, 15
20123 Milano (IT)**

(56) References cited:
**EP-A1- 2 416 535**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for determining the minimum realignment capability necessary at a receiving station for realigning a transmitted digital flow distributed over a set of selected physical links and a procedure for selecting a set of physical links to be combined in a single logic link between a transmitting station and a receiving station.

It is known, in the technical sector of digital transmission, that the transmission of a data flow between two stations, i.e. a transmitting station TX and receiving station RX, may be carried out using in parallel a certain number of physical links between the two stations.

It is also known that, in the same sector, in order to optimize the overall transmission capacity, the management of a plurality of physical links may be performed by aggregating, i.e. combining, the physical links in a single logic link between the transmitting station and the receiving station; this may be achieved using different methods and, in general, procedures of this type are defined as being of the type performing "aggregation" or "concatenation" of the physical links in a single logic link, characterized by a given aggregate transmission capacity.

The known procedures of this type which allow several Ethernet links to be combined are typically affected by the following problems:

- the distribution of the packets on the different physical links is performed depending on a value obtained, for each packet, from hashing operations carried on given fields of the packet header; this means that the working efficiency of the overall aggregate capacity of the combined links is statistical and not deterministic, since it depends on the value of the fields which form the headers of the packets to be transmitted; consequently, it is never possible to ensure use of the total transmission capacity, even in the case of optimum operational conditions of the single links.
- they are functional almost exclusively for physical links which are homogeneous, namely which have at least the same capacity and same processing latency;
- they are not very adaptable to variations in the state of the single physical links (e.g. unavailability and/or any changes in capacity of the single links).

Solutions of this type are not applicable to physical links of the radio type, such as physical links on digital radio links, for which the capacity is a particularly important factor which is variable (because of the nature of the link) depending on the changing operating conditions of the links (consider, for example, so-called ACM - Adaptive Coding and Modulation - techniques).

The sector of point-to-point radio communications is moreover characterized by a significant diversity between the different radio links implemented (different frequencies, channels, modulations, latencies, etc.); in particular, the capacities of the single links may vary from a few Mbps to several Gbps (E-Band).

The technical problem which is posed, therefore, is that of providing a method and a system for aggregation of physical links and their components, which are able to remedy or at least partly reduce the aforementioned drawbacks and problems of the prior art.

In connection with this problem a particular object of the present invention is to find a solution to the problems associated with the aggregation of radio links, allowing the aggregation of links which are heterogeneous, for example characterized by different bands and/or different latencies and/or which use adaptive modulation techniques (ACM) or also different physical interfaces.

In connection with this problem it would therefore be desirable to provide a data transmission system in which:

- the aggregate transmission capacity is maximized, using in the best possible manner the capacity of each link;
- the system is able to perform the transmission on combined links without knowing the type of information transported or the protocol used in the transported signal;
- the overall latency introduced by the aggregate transmission during transit of the information flow is less compared to the known systems;
- there is no irregularity and/or loss of information elements which cross the system owing to the use of links with a transmission capacity which is different or also variable over time;
- the procedure and/or the transmission system require a minimum exchange of information both between the transmitter and the source of the signal to be transmitted and between the receiver and the transmitter.

In connection with this problem it is also preferable that this procedure should be simple to implement in order to allow a reduction in the number of circuits and a consequent reduction in the corresponding costs of production of the equipment for realizing this procedure.

In connection with the processes for aggregation of physical links it is moreover particularly important to determine the realignment capability necessary at a receiving station for realignment of a transmitted data flow divided up over a plurality of links combined in a single logic link. Patent publication number EP2416535 discloses a known method for Ethernet link-aggregation with ACM. A further object of the present invention is therefore to provide a method for determining easily such a realignment capability.

These results are obtained according to the present invention by means of a method for determining the minimum realignment capability necessary at a receiving station according to Claim 1, and a procedure for selecting a set of physical links to be combined in a logic link according to Claim 4. Further preferred embodiments are described in the dependent claims which are cited here in full.

Further details may be obtained from the following description of non-limiting examples of embodiment of the subject of the present invention, provided with reference to the accompanying drawings, in which:

Figure 1: is a synthetic and simplified block diagram of an example of a structure of a transmission/reception system which implements the teachings of the present invention;
Figure 2: is a view, in greater detail, of the transmitter side of a transmission/reception system similar to the system of Fig. 1;
Figure 3: is a view, in greater detail, of an aggregate capacity manager of the transmitter side according to Fig. 2;
Figure 4: is a flow diagram of an example of calculation of a combined set of available links;
Figure 5: is a detailed view of a variation of embodiment of an aggregate capacity manager;
Figure 6: is a view, in greater detail, of the receiver side of a transmission/reception system similar to the system of Fig. 1; and
Figure 7: is a simplified schematic view of an example of embodiment of a transmission and/or reception station which implements the teachings of the invention.

## DEFINITIONS

For the purposes of and according to the meaning as used in the present description the following definitions are provided:

**GFP and GFP frame:** Generic Framing Procedure is understood as meaning a generic framing procedure which allows the adaptation of a generic flow of original data, typically of the asynchronous or non-continuous transmission type, within a predefined transmission frame structure, usually of the continuous transmission type, optionally with the addition to the original traffic flow of non-useful filler data;

**Payload:** Load of useful information data in a digital flow, typically Ethernet packets;

**Physical link:** One-way or two-way physical level link between two terminals which communicate remotely;

**Cable link:** Physical link where the two terminals are connected by means of cables or the like which form transmission lines on which the information is transmitted;

**Radio link:** One-way or two-way physical link between two terminals which communicate remotely by modulating and irradiating electromagnetic waves in the space without an artificial guide;

**State of a link:** Operational state of a link which determines the possibility of use thereof for data transmission; a link may be in an "available" state if it is able to transmit information or in an "alarmed" state if it is not possible to transmit any information owing to operational problems (e.g. disconnected modem, broken cable, misaligned antennas, etc.).

**Link configuration:** Set of parameters which characterize the operation of the single link; it comprises at least the transmission capacity and the characteristic latency of the link; a certain set of values of the operating parameters, defining a specific configuration, may be identified and summarized by means of a configuration identifier.

**Radio link capacity:** Maximum payload amount which can be transmitted per unit of time on the single radio link; for links which use adaptive coding and modulation (ACM) the capacity is variable and depends on the configuration of the link, in particular the link modulation profile during use, which varies adaptively in response to external factors;

**Characteristic latency of a link:** Overall processing delay on the link from the local apparatus to the remote apparatus, net of the transmission delay (in the air for a radio link) at the transmission capacity. The processing delay is internal within the modulation/transmission apparatus and depends on the nature of the link and the configuration of the said apparatus.

**Modulation profile of a radio link:** Summary profile of the configuration parameters relating to modulation, adopted by the (de)modulation apparatus of a link; the modulation on a radio link may be adaptive (ACM) and the capacity of the link may therefore vary in response to external factors;

**Aggregation or concatenation:** logical union of several existing physical links between a local transmitting station and a remote receiving station, able to create a single logic link, the transmission capacity of which is maximized and tends to be equal to the sum of the transmission capacities of the single physical links;

**Aggregation group:** Group comprising the physical links which are provided between a transmitting station and a corresponding receiving station and which may be selectively combined in a single logic link between the two stations by means of an aggregation process;

**Container:** data packet comprising data to be transmitted and a container overhead which comprises information for management of the aggregation/disaggregation process;

**Aggregate Capacity Manager:** unit which has the function of identifying which links belonging to the aggregation group (given their state and/or configuration) may be combined in order to transmit traffic, as well as which combination of said links maximizes the aggregate capacity of the logic link, in a manner compatible with the realignment capability of the receiver.

**Realignment capability of the receiver:** Maximum capacity of the receiving station to store data received in a disorderly manner on the different combined links so as to realign said data sequentially; it generally corresponds to the dimensions of a realignment memory of the RX station or to a quantity of memory allocated at the RX station for realignment.

**Set of available links with maximum aggregate capacity, compatible with the realignment capability on the receiver side:** set or subset of physical links, selected from those belonging to the aggregation group and in an available state, which, if combined in a single logic link, determine an aggregate capacity of the logic link which is the maximum possible, compatible with the maximum realignment capability of the receiving station; each combination of links requires, for realignment of the flow of containers at the receiving station, a minimum realignment capability.

**Future or preannounced configuration of a link:** future configuration which the modulation/transmission apparatus of a link will adopt within a (short) time T for the transmission of data on the link; the modulation/transmission apparatus of a link preannounce to the transmitting station a change in the link configuration a certain amount of time T before the change itself occurs.

In addition, below the abbreviations TX and RX will be used with reference respectively to transmission and reception and to corresponding transmitting and receiving sides of a transmission/reception system or a link.

## GENERAL STRUCTURE

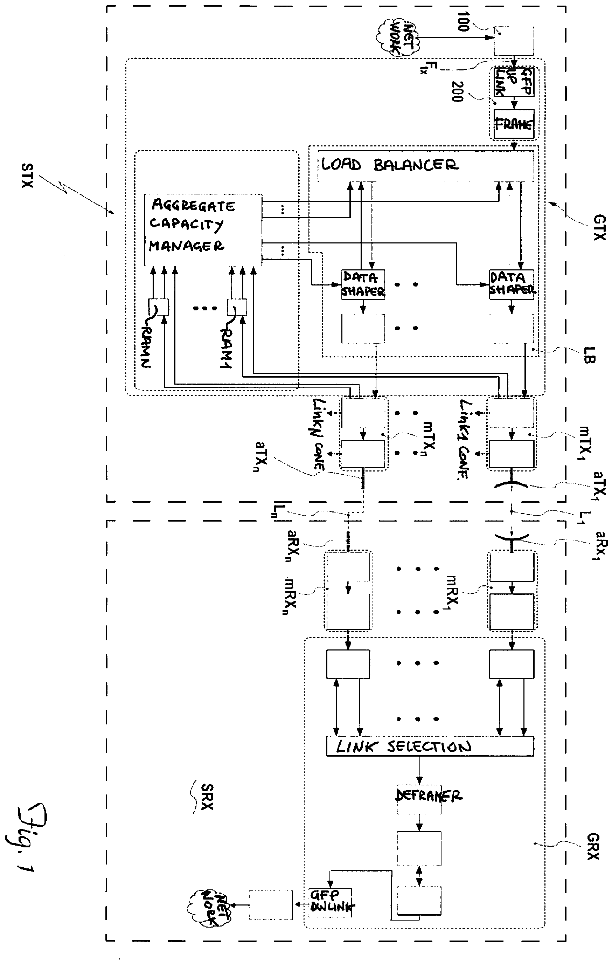

With reference to Figure 1, this shows in schematic form the general structure of a transmission/reception system inserted in a telecommunications network, comprising:

- at least one station STX for transmitting at least one digital payload flow $F_{TX}$ coming from the telecommunications network and at least one receiving station SRX for receiving the said at least one flow $F_{tx}$ and forwarding it downstream on the telecommunications network;
- The STX station comprises:

    •• apparatus $mTX_1,...,mTX_N$ on the TX side for N physical links $L_1,...,L_N$ to be combined in a single logic link between the TX station and the RX station, the apparatus $mTX_1,...,mTX_N$ being suitable for modulation (conversion) and high-frequency transmission of signals on the respective link and being suitably connected to associated transmission antennas (for radio links) or cables (for cable links) $aTX_1,...,aTX_N$ of the respective link $L_1,.. ,,L_N$;
    •• an apparatus GTX for managing aggregation in trasmission, for distributing the flow $F_{TX}$ over a plurality $N_a$ of said physical links N combined in a single logic link between the STX station and the SRX station;
    •• the additional components for upstream interfacing with the telecommunications network, which are conventional per se and not shown in detail, are schematically represented by means of the NETWORK UPLINK INTERFACE block;

- Correspondingly, the SRX station comprises:

    •• receiving antennas (or cable ends) aRx connected to associated apparatus mRx for RX-side reception, (conversion) and demodulation of each link;
    •• an apparatus GRX for managing disaggregation on reception, which has the task of receiving the flows transmitted on the aggregated links and recomposing the original flow $F_{TX}$ for downstream forwarding in the telecommunications network;
    •• the additional components for downstream interfacing with the telecommunications network, which are conventional per se and not shown in detail, are schematically represented by means of the NETWORK DOWNLINK INTERFACE block.

Although in Fig. 1 the apparatus mTX and mRX of a radio link, which are connected to the respective antennas of the link, are schematically shown as independent units comprising modulators (or demodulators), converters into (from) high frequency and high-frequency transmitters (receivers), namely so-called Full Outdoor units, it is understood that the components of the said apparatus may also be divided up between an indoor unit (IDU) and a less complex outdoor unit (ODU), which is for example responsible solely for conversion (and subsequent transmission) from an intermediate frequency to a high frequency of signals already modulated within the IDU, as will become clearer below.

With this general structure, a procedure for transmission of the flow $F_{TX}$ of original data on a plurality $N_a$ of combined radio links is structured in accordance with the general steps illustrated below.

- On the TX side the manager GTX is responsible for:

  - packaging the digital flow Ftx to be transmitted in a GFP-type frame;
  - dividing up the GFP frame into containers of fixed size, with the addition of a container overhead comprising a sequence number and data for protecting the said sequence number (for example CRC codes);
  - transmitting the flow of containers, distributing them on the N links of the aggregation group, or on a subset $N_a$ thereof, depending on the configuration of the single links and in a manner compatible with the realignment capability on the receiver side, which is dependent in particular on the capacity and on the state of an RX-side realignment memory of the GRX manager.

- On the reception side, the GRX manager is instead responsible for:

  - receiving the containers transmitted on the combined links;
  - checking that the containers received are not corrupt;
  - reordering them in a realignment memory depending on the sequence number;
  - removing the concatenation overhead;
  - deframing the GFP-type flow thus obtained and reconstructing the original flow Ftx.

## DETAILED DESCRIPTION OF THE TX SIDE

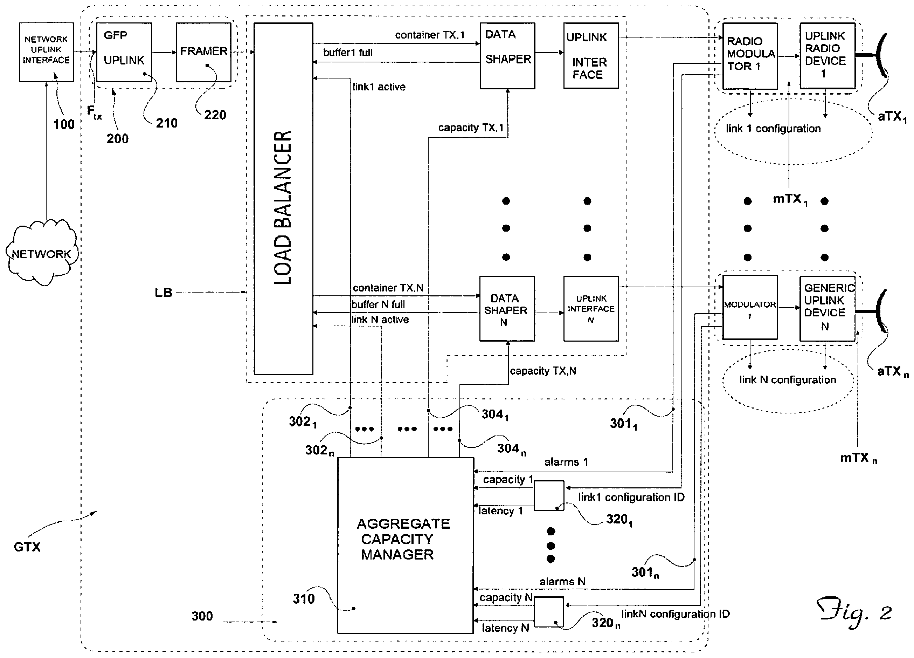

With reference to Fig. 2, this shows the TX side of a transmission/reception system similar to the system shown in Fig. 1, but comprising only links of the radio type L1,...,Ln and in which the data flows coming from the upstream telecommunications network are managed by suitable flow control interfaces (per se conventional) which provide at this output at least one digital flow $F_{tx}$ to be transmitted to the receiving station SRX.

The at least one flow $F_{tx}$ to be transmitted is input into a block 200 for converting the flow to be transmitted. The conversion block 200, if the link aggregation functionality is enabled, performs the operations of:

- packaging the digital flow Ftx to be transmitted in a GFP-type frame, preferably of the continuous type, by means of a GFP packaging block 210;
- dividing up the GFP frame into containers of fixed size, adding a container overhead comprising a sequence number and data for protecting the said sequence number (for example a CRC code).

In greater detail, the flow $F_{tx}$ is converted by the GFP block 210 into a continuous flow, with a frame for example of 32 bits; since the flow from the GFP block 210 is regarded as a continuous data flow, both the content and the structure of said flow are unimportant.

The GFP flow is then divided up, with the addition of an aggregation overhead, by means of a dividing block 220, into packets of predefined length (e.g. 256/512/1024 bytes, which may be configured), referred to below as "containers". The block 220 adds an overhead comprising a sequence number, which determines progressive numbering of the containers that allows the receiving station SRX to reconstruct the flow, transmitted divided up on the different combined links.

Preferably, the containers are provided with a structure similar to that of Ethernet packets and a suitable spacing on the basis of the capacity of the radio links. In this way, the containers may cross without problems standard Ethernet components (e.g. a switch L2) which is important for example in the case of full outdoor transmission units to which the connection is performed via Ethernet ports.

Since the sequential numbering information of the container is important information, it is preferably protected with the further addition of a CRC, in order to prevent incorrect reception of a sequence number from not only causing the loss of the container affected by the said error, but also the loss of another container having the incorrect sequence number. The containers received with a corrupted sequence number are thus simply discarded, without influencing further containers received. The sequence number information and the associated CRC therefore form the overhead generated by the aggregator and added to the GFP frame in each container.

Preferably, in order to prevent a container from being mistakenly identified as a flow control packet, the overhead is adapted so as to never reproduce the ethertype of a flow control packet (HEX"8808").

The container flow thus formed is distributed for transmission on a plurality $N_a$ of links of the aggregation group, selected depending on the configuration of the links and the realignment capability on the RX side and combined in a single logic link between the STX station and SRX station.

In particular, a distribution block LB forwards the containers on the links in accordance with a set of links, selected from among those available, which determines the maximum aggregate capacity compatible with the realignment capability of the SRX station.

As will become clearer below, this set is processed by an aggregate capacity manager 300 on the basis of:

- the present and/or future (available/alarmed) state of each radio link;
- the configuration of each available link;
- the realignment capability of the receiver-side SRX station, in particular of the realignment memory or buffer of the SRX station.

As shown in Figure 2 and as will become clearer below, an example of a distribution block LB may comprise:

- a load balancing element for cyclically distributing the containers to the links, and
- one or more adapter elements, called "shapers" and provided with suitable storage memories and interfaces for connection to the apparatus mTX of the physical links, able to adapt in particular the transmission rate of the containers output by the conversion unit 200 to the transmission capacity configured on the i-th link for which the container flow is intended. With this structure, the flow of containers output by the distribution block LB to the apparatus mTX of a link will always be adapted to the (preannounced and now current) transmission capacity of the said link. In the event of an excessive misalignment between the transmission rate of containers input into the shaper and the capacity of the link, which corresponds to the transmission rate at the shaper output, the memory of the adapter element will be filled and the latter may request temporary suspension of forwarding of containers to the associated link, preventing the loss thereof.

## DETAILED DESCRIPTION OF THE AGGREGATE CAPACITY MANAGER

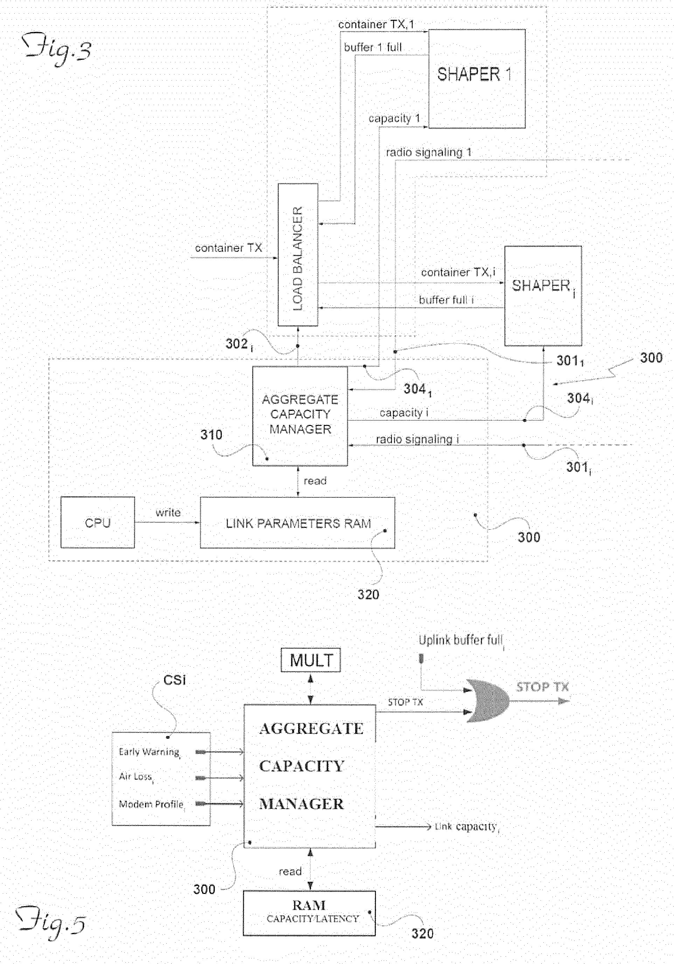

Figure 3 shows a schematic view, in greater detail, of an example of an aggregate capacity manager 300.

The aggregate capacity manager 300 shown by way of example comprises a unit 310 for processing a set of available links which maximizes the aggregate capacity in a manner compatible with the realignment capability of the SRX station.

The aggregate capacity manager 300 comprises signal inputs $301_i$ for receiving state and/or link configuration signals from the TX-side apparatus mTX; of each link $L_i$.

Preferably, the manager 300 also has access to a memory 320 comprising information relating to operative configuration parameters of each link.

In particular, the memory 320 may also comprise information which allows the values of some suitable configuration (preferably capacity and latency) parameters currently or about to be adopted by a link to be obtained from a configuration identifier received from the apparatus mTX of said link.

According to a preferred procedure for processing the set of links available with maximum aggregate capacity, compatible with the realignment capability of the SRX, the manager 300 uses only the configuration information relating to the future processing latency and capacity on the link.

The manager 300 further comprises signals outputs $302_i$ for controlling distribution of the containers on the $N_a$ links $L_i$ of the aggregation group, in accordance with the processed set of links which determines the maximum aggregate capacity compatible with the realignment memory on the RX side. The signal outputs 302i may be for example connected to the block LB for distributing the containers to the radio apparatus mTX of the links L of the processed set.

Preferably the manager 300 further comprises signal outputs $304_i$ for sending instructions relating to the transmission capacity which will be used on a given link of the processed set, to the respective adapter elements (shapers) of the distribution block LB, which adapt the transmission rate of the containers to the modulation apparatus mTX/transmission apparatus mTX; of one or more links of the processed set.

As mentioned, the aggregate capacity manager block 300 is adapted to process a set of available links which, if combined, determine the maximum aggregate capacity of the logic link, compatible with the realignment capability on the receiver side RX.

In general, a method for processing such a set comprises the steps of:

-) determining the links in an available state of the aggregation group;

-) determining the transmission capacity and processing latency values preannounced for each available link;

-) calculating the aggregate capacity of each possible combination of said available links;

-) calculating the minimum realignment capability necessary at the receiver SRX for each possible combination of available links;

-) selecting the combination of available links with minimum necessary realignment capability compatible with the realignment capability of the receiver SRX, having maximum aggregate capacity;

According to preferred embodiments, the step of determining the available links may comprise checking of any change in state of each link of the aggregation group and/or construction of a list of available links.

The step of determining the link transmission capacity and latency may comprise the reception or consultation of a preannounced configuration identifier from a modulation/transmission device mTX of a link and recovery of corresponding capacity and latency values associated with the identified configuration.

The step of calculating the aggregate capacity and/or calculating the minimum realignment capability necessary at the receiving station RX, for each possible combination of said available links, may comprise the steps of:

--) defining all the possible combinations of available links;

--) calculating the aggregate capacity and/or the minimum realignment capability necessary for each combination identified.

Selection of the set of links with maximum aggregate capacity, compatible with the realignment capability of the RX station, may comprise:

--) evaluating compatibility of each calculated minimum realignment capability necessary at the RX with the realignment capability of the receiving station SRX; and

--) comparing all the aggregate capacities associated with link combinations having a minimum realignment capability necessary at the receiver RX compatible with the realignment capability of the receiver RX.

This option is very rapid from a computational point of view.

A further possibility may comprise the substeps of:

--) hierarchical ordering the possible combinations of links in decreasing order of aggregate capacity; and

--) progressive evaluation, in this order, of the compatibility of the respective calculated minimum realignment capabilities necessary at the SRX with the realignment capability of the receiving station SRX until a combination compatible with said realignment capability of the SRX is identified.

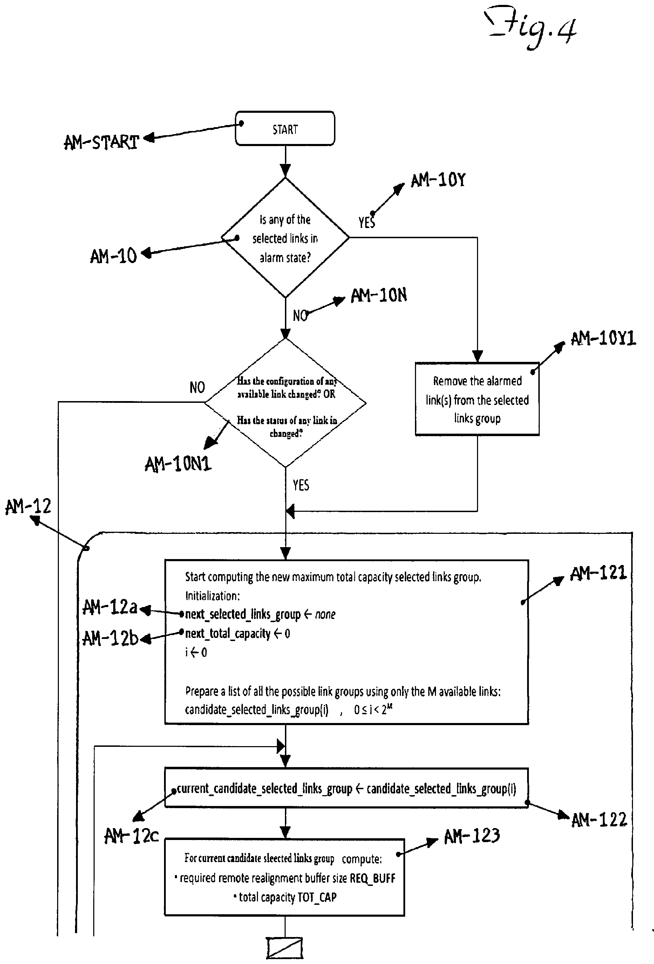

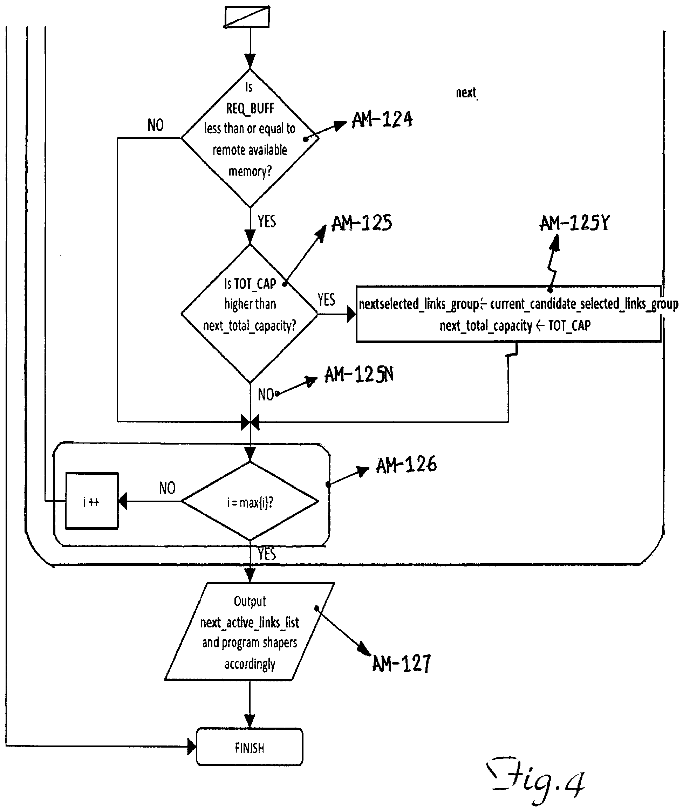

In greater detail and with reference to Fig. 4 which shows a flow diagram of a preferred example of embodiment, the general method described above may be implemented by the processing unit 310 for example as follows:

-) at the start of the cycle AM-START the manager 300 is initialized with a set of available links having maximum aggregate capacity, compatible with the realignment capability at the receiver, and with respective configuration information of each link comprising at least the future processing capacity and latency obtained from the memory 320 of the manager;

this initial optimum set may be for example a default set or the last set of available links used.

-) AM-10:

• the manager 300 checks if it has received AM-10N signals relating to a change in link state from at least one of the links belonging to the set with maximum aggregate capacity:

•• YES: AM10Y) each link, the state of which was signalled as an alarmed state, is removed from the list of available links (AM-10Y1) and the manager 300 passes to a step AM12 for processing a new set of available links with maximum aggregate capacity, compatible with the realignment capability at the RX station;

•• NO: AM10N) the manager 300 checks AM10N1) if it has received AM-10N signals relating to a change in configuration from at least one of the links belonging to the set with maximum aggregate capacity, and/or if it has received AM-10N1) signals relating to a change in state (from "alarmed" to "available" or vice versa) from at least one of the links of the aggregation group;

••• NO: AM-FINISH) the last set calculated is selected as a set of available links which maximizes the aggregate capacity, in a manner compatible with the realignment capability of the SRX station.

••• YES: the manager 300 passes to the step AM12 for processing a new set of available links with maximum aggregate capacity, compatible with the realignment capability of the SRX station.

AM12) Processing the set of available links with maximum aggregate capacity, compatible with the realignment capability of the receiver SRX:

AM121) the manager 300 generates an updated list of available links and identifies all the possible combinations of said available links which are listed in a corresponding list;

a first and a second variable are initialized, said variables relating respectively to:

AM-12a) a new combination of selected available links;

AM-12b) the aggregate capacity of the new combination of selected available links; AM-122) a third variable AM12c relating to a current candidate combination of available links is initialized;

AM-123) For the current candidate combination AM12c of available links the following are calculated:

TOT_CAP: the aggregate capacity of the current candidate combination of available links;

REQBUFF: the minimum realignment capacity necessary at the RX side for reordering the containers transmitted on the set of links defined by the current candidate combination of available links;

AM-124) It is checked that the minimum realignment capacity REQ_BUFF necessary is compatible with the realignment capability of the receiving reconstruction station GRX; generally this capability of the station GRX is fixed for a given configuration of the receiving station, since it depends on the dimensions of a realignment buffer of the station GRX (i.e. the amount of memory allocated for performing alignment). It is understood that this capacity is known to the manager 300 and may if necessary be configured, if desired.

- if the calculated minimum capacity REQ_BUFF is not compatible with the realignment capability of the station GRX for reconstruction upon reception:

•• the current new combination AM-12a of selected available links and the respective aggregate capacity AM-12b remain unvaried.

• if the calculated minimum capacity REQ_BUFF is compatible with the realignment capability of the receiving reconstruction station GRX:

AM-125) the aggregate capacity TOT_CAP of the current candidate combination of links is compared with the aggregate capacity AM12b of the new combination of selected available links, and:

AM125N) if the aggregate capacity TOT_CAP of the current candidate combination of links is less than the aggregate capacity AM12b of the new combination of selected available links:

•• the current new combination AM-12a of selected available links and the respective aggregate capacity AM-12b remain unvaried.

or

AM125Y) if the first capacity TOT_CAP is greater than the second capacity AM12b:

•• the current candidate combination AM12c is set as new combination AM-12a of selected available links and the respective capacity TOT_CAP is set as new aggregate capacity AM-12b of the new combination of selected available links;

AM126) the cycle counter (i) is increased and the calculation operations (AM122-AM125) for all the possible combinations of available links are repeated iteratively;

AM127) the new combination of selected available links contained in the variable AM12a as set of available links, with maximum aggregate capacity compatible with the realignment capability at the RX station selected, is output.

On the basis of this processed set, the aggregate capacity manager 300 enables forwarding of the containers on the links of said set at the distribution block LB.

Preferably and if this is possible and/or necessary, the aggregate capacity manager further signals the transmission capacity $TX_i$ used on the link to the respective adapter elements SHAPER;, which perform adaptation of the flow to the modulation/transmission apparatus $mTx_i$ of each link of the processed set.

According to a preferred and advantageous aspect of the invention, said set of available links which maximizes the aggregate realignment capacity and requires a minimum realignment capability compatible with the realignment capability of the SRX station is processed by the manager 300 on the basis of information relating to the future configuration of the links.

Preferably, said future configuration information comprises and preferably consists of the following configuration parameters:

- the transmission capacity of the physical link;
- the characteristic latency of the link:

Preferably at least part of this configuration information is obtained by the manager 300 from information for identification of the future configuration (ID configuration) indicated by the apparatus mTX of the links $L_i$ of the aggregation group.

In particular, for each candidate combination of available links, the aggregate capacity and the minimum realignment capability necessary at the RX station may be calculated on the basis of this configuration information.

For radio links, the configuration identifier may consist of an identifier of the modulation profile adopted by the link apparatus mTX.

Although the implementation of an algorithm for selection of the set of available links with maximum aggregate capacity may be relatively complex and the processing requires numerous clock pulses, the procedure described advantageously makes use of the advanced notification (a few milliseconds beforehand) with which a change in configuration, in particular a variation in the modulation profile, is communicated to the aggregate capacity manager 300 by a modulation/transmission apparatus mTX of a link of the aggregation group, thus ensuring that the procedure for processing the new set of available links with maximum aggregate capacity is completed before the change in modulation profile takes place on the link.

According to a preferred embodiment, the manager 300 performs processing on the basis of a configuration identifier (e.g. a modulation profile ID) received and of information contained in the memory 320 of the manager 300; in particular the manager 300 recovers from suitable registers of the memory 320 the values of the operative configuration parameters of each available link depending on the configuration adopted by said link.

For example, a table or matrix may be saved in the memory 320 and indicate for one link, several links or each link the values of the operating parameters for varying configuration identifiers.

Preferably, the manager 300 performs recalculation of the set of available links with maximum aggregate capacity of the logic link, compatible with the realignment capability at the RX station, only if it receives at least one signal of a change in state and/or configuration from at least one link. In this way it is possible to avoid having to recalculate continuously the optimum set also in a case where there are no variations in the state or operative configuration parameters of the links.

According to a preferred aspect, the future configuration information of an available link: is set to be the same as the current configuration information for the links where the modulation/transmission apparatus mTX have not preannounced changes in configuration, while

it is reprocessed for the links where the apparatus mTX have announced a change in configuration.

It is also clear how, with the procedure described, it is possible to process the optimum set of combined links for distribution of the flow of containers to be transmitted in a deterministic manner and not on the basis of randomly determined criteria which do not ensure the effective maximization of the aggregate transmission capacity.

## DETAILED EXAMPLE OF AN AGGREGATE CAPACITY MANAGER

Figure 5 shows a more detailed block diagram of an example of embodiment of a variant of the functional structure of the manager 300 for an i-th physical radio link of the aggregation group. The diagram is useful for understanding operation of the manager 300, in particular with regard to the radio links of the aggregation group, for which the operating logic of the manager 300 will be the same. For cable links, which are less subject to adaptive changes in configuration, the logic structure may be simplified.

The aggregate capacity manager 300 may decide non-use of the i-th link, indicated in Figure 5 by the signal STOP Txi, in the case where:

- there are signals (e.g. early warning or air loss signals) relating to a change in state of only the i-th link considered;
- the link does not belong to the set of links with maximum aggregate capacity compatible with the realignment capability; namely depending on the configuration characteristics, in particular capacity and latency characteristics, of all the available links (including the link considered) of the aggregation group.

In greater detail, an air loss signal from the modem of the modulation/transmission apparatus mTXi of the link is an instantaneous signal which indicates a marked deterioration in the performance of the radio channel of the link.

The early warning and modem profile signals are instead communicated by the modem a few milliseconds before the event.

The early warning signal indicates an imminent deterioration in the performance of the radio link, which will determine a change in state of the link from "available" to "alarmed".

The modem profile signal indicates a change in the modulation profile - and therefore configuration of the link - this generally corresponding to a variation in the transmission capacity and/or processing latency of the radio link.

Preferably, the early warning and air loss signals are emitted immediately in the event of a deterioration in the performance (transition '0' to '1'), namely the manager 300 will immediately register a change in state from "available" to "alarmed" for the i-th link, while said signals are preferably emitted with a delay of a few milliseconds should there be signs of improvement (transition '1' to '0'); in this way it is ensured that the link is enabled for the transmission of containers only when it is effectively in the available state and therein in a condition to transmit without errors.

The information relating to the modulation profile is instead used by reading the RAM 320 in which the operative configuration parameters, in particular the capacity and latency, are written, said parameters being characteristic of each link of the aggregation group and in some cases varying depending on the modulation profile adopted by the link modulation/transmission apparatus mTX.

Owing to the reception, in advance, of the change in configuration signal, the manager 300 may obtain updated information relating to the configuration of the link and recalculate the set of available links which maximizes the aggregate capacity, before the link has switched to the new configuration, ensuring in a deterministic manner an optimum flow of containers distributed only on available links. Whenever the manager receives a signal relating to a change in state and/or configuration of at least one link of the aggregation group, the manager 300 therefore proceeds to reprocess the set of combinations of available links which maximizes the aggregate capacity in a manner compatible with the realignment capability of the reception station SRX.

## CALCULATION OF THE MINIMUM CAPABILITY NECESSARY AT THE RX STATION

A particularly innovative aspect of the present invention relates to a method for calculating the minimum realignment capability REQ_BUFF,$\Delta_{req}$ necessary at the receiver for a given combination of available links belonging to an aggregation group and characterized by respective link configurations.

The operative configuration parameters of the i-th link are defined as follows:

$C_i$ = Radio transmission capacity of the link, for example expressed in bit/s;

$r_i$ = characteristic processing latency of the i-th link (which depends on the nature of the link and channelling, but not on the transmission capacity), expressed in seconds;

as well as:

$cntr_{size}$ = the size of a container (which is fixed for a given configuration of the aggregation system), e.g. expressed in bits;

For each available link the time $T_i$ for transmission of a container from the local concatenator to the remote deconcatenator on the i-th link is calculated:

$$T_i = [(K * cntr_{size}) / C_i] + r_i$$

wherein K is a factor introduced to take account of the adaptation performed by the SHAPER adapter element of the distribution block; K is preferably set to 2; since the container is affected twice by the transmission latency at the capacity $C_i$: once because of the SHAPER and once because of the modem. In the case of the adapter element integrated in the modulation apparatus, K could be reduced to 1.

The following are calculated:

. $T_M$: the transmission time on the available link with maximum transmission time of the candidate combination of available links:

$$T_M = \max_i \{T_i\} = [(2 * cntr_{size})/C_M] + r_M$$

$T_m$: the transmission time on the available link with minimum transmission time of the candidate combination of links:

$$T_m = \underset{i}{\min\{T_i\}} = [(2*cntr_{size})/C_m] + r_m$$

where $C_m, C_M$ and $r_m, r_M$ are the respective transmission capacities and processing latencies associated with said links with minimum and maximum transmission time.

For a combination of candidate links, the minimum storage capacity $\Delta_{req}$ (expressed in number of containers) necessary for the realignment at the reception station GRX is calculated as follows:

$$\Delta_{req} = N_a + \frac{(T_M - T_m)}{cntr_{size}} \cdot \sum_i C_i$$

$$\Delta_{req} = N_a + \left(2 \cdot \frac{C_m - C_M}{C_M \cdot C_m} + \frac{r_M - r_m}{cntr_{size}}\right) \cdot \sum_i C_i$$

where $N_a$ is the number of combined links of the candidate combination of links.

In this way, advantageously, it is taken into account that, in order to perform realignment of the containers, the manager of the aggregation GRX of the remote station SRX must have the capacity to store:

- the quantity of containers transmitted by each of the combined links between the reception of a container on the m-th link with shortest transmission time and the reception of the container on the M-th link with longest transmission time (hence in the time interval $T_M - T_m$);
- a "base" of $N_a$ containers, where $N_a$ is the number of combined links, since also in the case of perfectly uniform links it could be required to store at least one container per link before being able to realign the containers.

## DETAILED DESCRIPTION OF THE RX SIDE

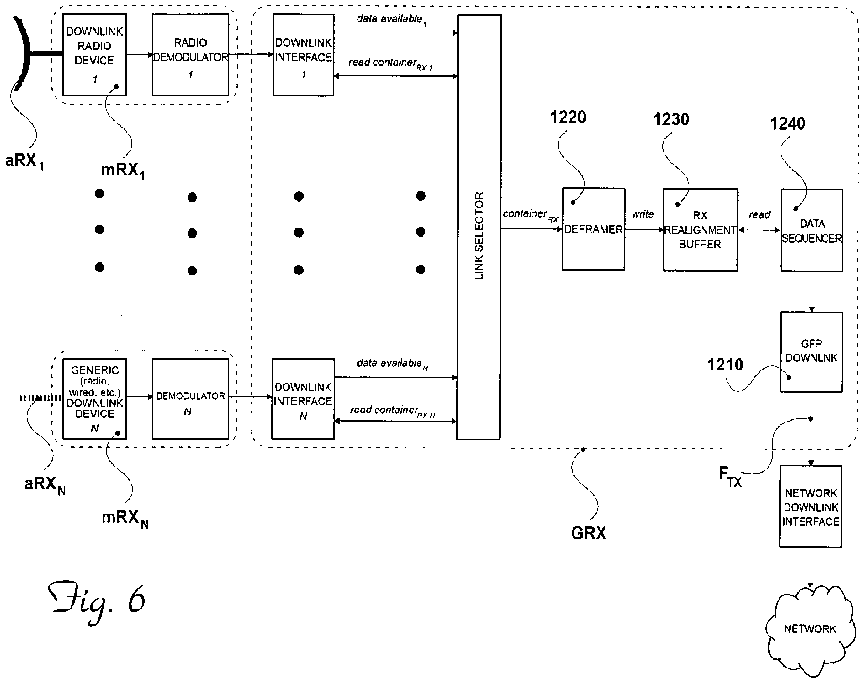

With reference to Figure 6, this shows the RX side of a transmission/reception system similar to the system shown in Fig. 1, comprising a receiving station SRX with:

•• receiving antennas aRX of the aggregation group links connected to associated RX-side reception/demodulation apparatus mRx of each link;
•• an apparatus GRX for managing aggregation on reception, which has the task of receiving the containers transmitted on the combined radio links and recomposing the original flow $F_{TX}$ for forwarding downstream to the telecommunications network;
•• the additional NETWORK DOWNLINK INTERFACE components for interfacing downstream with the telecommunications network.

The flows of containers transmitted on the processed set of $N_a$ combined links are received on the reception side and are forwarded to the apparatus GRX for managing aggregation on reception.

The apparatus GRX comprises:

- a block 1220 for deframing the containers from the combined radio links, which extracts and controls the sequence number of each uncorrupted container and writes payload data of the containers (without header) in:
- a realignment memory or buffer 1230 in which the payload data of the containers for realignment of the data flow are stored;

- a block 1240 for reconstruction of the initial flow GFP, which reads the data of the realigned containers and emits a reconstructed initial flow GFP towards
- a reception processing block GFP, which extracts from the reconstructed flow GFP the original Ethernet digital flow $F_{tx}$.

The deframing block 1220 writes the containers received in the realignment buffer after checking the correctness of the aggregation overhead of the container. This checking operation is performed by recalculating the HEC (Head Error Control) of the overhead received and comparing it with that extracted from the overhead itself.

In addition to checking that the aggregation overhead is correct, the deframer checks that the sequence number extracted from the overhead lies within the range of acceptable values, namely those which address the realignment buffer.

In the preferred example of embodiment shown, the realignment buffer 1230 is used to store and realign the containers received and is addressed, by means of writing, by the sequence number extracted from the aggregation overhead. Each sequence number addresses a position (slot) of the buffer with the same dimensions as the size of the container. Since the containers received may *a priori* come from different links, non-adjacent sequence numbers may be associated with containers received in succession; consequently these containers will be written into non-adjacent slots of the realignment buffer.

While writing of the containers is performed *a priori* in slots which are not adjacent to each other, reading of the same by the reconstruction block 1240 is preferably performed sequentially, proceeding along consecutive slots, if necessary introducing a delay between reading of the slot[n] and reading of the slot[n+1].

## EXAMPLE OF A STATION

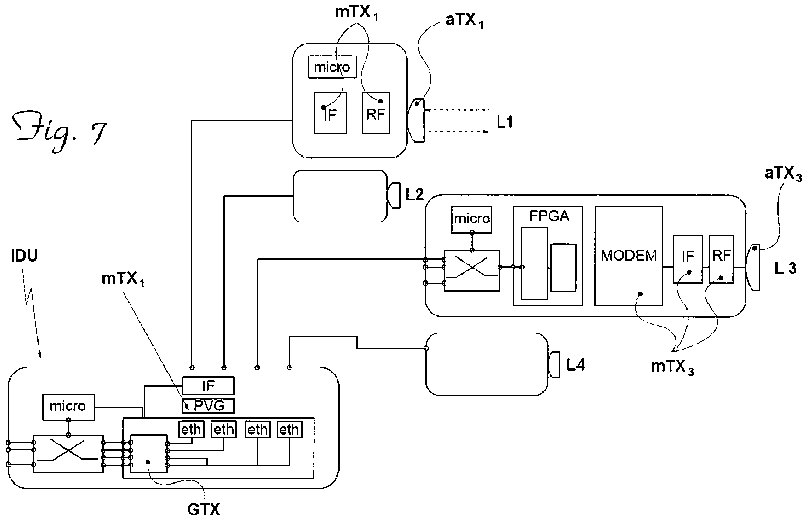

Figure 7 shows a schematic example of embodiment of a transmission/reception station which implements the teachings of the invention.

The station shown may act both as a transmitting station STX and as a receiving station SRX.

It is understood that, during use, in order to provide a one-way or two-way telecommunications system, at least two stations will be installed, each at a respective end of the link.

In greater detail, the transmission/reception station comprises an indoor unit IDU which incorporates a physical transmission-side aggregation manager GTX and a corresponding reception-side aggregation manager GRX, which are integrated in a programmable integrated circuit (for example an FPGA chip).

As shown, the aggregation managers GTX,GRX are responsible for aggregation of four physical radio links.

The chip which incorporates the aggregation managers is in fact connected to four conventional (e.g. electrical or optical) Ethernet interfaces, for connection respectively:

- to a first and a second modulation (and demodulation) apparatus incorporated in the indoor unit IDU, each connected by means of analog interfaces to:

  - a respective outdoor unit ODU which performs only the conversion and high-frequency transmission (reception) of the modulated signals originating (directed) from (to) the modem; each ODU is in turn connected to respective
  - transmission/reception antennas $aTX_1$ for the link $L_1$;

  this configuration reproduces therefore the system structure shown, in which the two radio links $L_1,L_2$ are installed between a respective modulation/transmission apparatus and reception/demodulation apparatus implemented partially in the IDU and partially in the ODU, which is connected to the respective antennas of the link;
- a first and second Full Outdoor unit ODU, each performing all the modulation/demodulation and high-frequency transmission/reception functions (mtx3) and connected to respective transmission/reception antennas $aTX_3,aTX_4$;

The four links $L_1,L_2,L_3,L_4$ may be different from each other and/or differently configured, for example using different channels.

## PRACTICAL EXAMPLE OF AGGREGATION

Let us assume that $L_1$, $L_2$, $L_3$ and $L_4$ are four generic links of an aggregation group, for example the links shown with reference to the station in Figure 6. The aggregation manager 300 has received from each apparatus mTX1, mTX2, mTX3, mTX4 a respective signal indicating a respective configuration ID which preannounces a respective future link configuration characterized by respective transmission capacity Ci and latency operating parameters from which the transmission time $T_i$ on the link is obtained. The parameters of interest have the following values:

- Link $L_1$: $T_1=4.3 \cdot 10^{-4}$ [s]; $C_1=100$ [Mbit/s].
- Link $L_2$: $T_2=3.8 \cdot 10^{-4}$ [s]; $C_2=300$ [Mbit/s].
- Link $L_3$: $T_3=1.17 \cdot 10^{-3}$ [s]; $C_3=10$ [Mbit/s].
- Link $L_4$: $T_4=1.99 \cdot 10^{-3}$ [s]; $C_4=5$ [Mbit/s].

The system shown in the example uses a "base" of 1 container for each link of the candidate combination and a container size $cntr_{size}=512$ byte. The maximum realignment capability of the receiving realignment buffer is $\Delta_{MAX}=80$ cntr.

The aggregation manager 300 determines that all four links L1-L4 are in an available state and calculates iteratively the values of the minimum realignment capacity needed for the buffer and aggregate transmission capacity for all the possible combinations of available links.

The values calculated are shown in Table 1.

| LINKS | | | | $\sum_i C_i$ [Mbit/s] | $\Delta_{req}$ [# cntr] |
|---|---|---|---|---|---|
| $L_1$ | $L_2$ | $L_3$ | $L_4$ | | |
| X | X | X | X | 415 | 167 |
| X | X | X | | 410 | 82 |
| X | X | | X | 405 | 162 |
| X | X | | | 400 | 7 |
| X | | X | X | 115 | 46 |
| X | | X | | 110 | 21 |
| X | | | X | 105 | 41 |
| X | | | | 100 | 1 |
| | X | X | X | 315 | 126 |
| | X | X | | 310 | 61 |
| | X | | X | 305 | 121 |
| | X | | | 300 | 1 |
| | | X | X | 15 | 9 |
| | | X | | 10 | 1 |
| | | | X | 5 | 1 |

Table 1

In view of these calculated values, the manager 300 selects the combination of links $L_1$ and $L_2$ (400;7) as a set of available links with maximum aggregate capacity compatible with the realignment memory $\Delta_{MAX} = 80$ of the RX station.

After a certain period of time, the aggregate capacity manager 300 receives an air loss signal from the link $L_2$; the manager 300 therefore determines that the link $L_2$ has passed to the alarmed state and excludes it from the available links.

The calculation of the aggregate capacity and minimum realignment capability necessary for the possible combinations of the remaining links $L_1,L_3,L_4$ remains unchanged compared to that of Table 1 and results in selection of the set comprising all three links $L_1,L_3,L_4$ (115;46) as set which has the maximum aggregate capacity (115 Mbit/s) compatible with the realignment capability $\Delta_{MAX} = 80$ of the SRX station.

After a further time interval, the aggregate capacity manager 300 receives a signal from the modulator $mTX_4$ of the link $L_4$ which preannounces a change in configuration identified by a new configuration ID. The signal is provided a few ms in advance of the actual implementation of the change in configuration of the link, such as to allow the calculation by the manager of the new optimum combination of available links.

The manager obtains the values for transmission capacity, latency and transmission time on the link which are associated with the new configuration:

- Link $L_4$: $C_{4,new}=1$ [Mbit/s] $T_{4,new}=8.54 \cdot 10^{-3}$ [s].

The aggregate capacity manager 300 then recalculates the values for minimum realignment capability $\Delta_{req}$ necessary for the realignment buffer and aggregate transmission capacity $\sum_i C_i$ for al the possible combinations of available links. The values calculated are shown in Table 2.

| LINKS | | | $\sum_i C_i$ [Mbit/s] | $\Delta_{req}$ [# cntr] |
|---|---|---|---|---|
| $L_1$ | $L_3$ | $L_4$ | | |
| X | X | X | 111 | 222 |
| X | X | | 110 | 21 |
| X | | X | 101 | 201 |
| X | | | 100 | 1 |
| | X | X | 11 | 24 |
| | X | | 10 | 1 |
| | | X | 1 | 1 |

Table 2

In view of these calculated values, the manager 300 selects the combination of links $L_1$ and $L_3$ as set of available links with maximum aggregate capacity (100 Mbits/s) compatible with the realignment memory of the RX station.

It is therefore clear how, with a method and a procedure according to the invention, it is possible to select, from an aggregation group, a set of available links between a transmitting station and a receiving station which results in a logic link between the two stations having the maximum possible aggregate transmission capacity, compatible with the capability of the receiving station to realign the sent data flow divided up on the links of said set.

The aggregation manager and the associated procedures described allow moreover reprocessing of said set of links in a timely and deterministic manner whenever a change in state and/or configuration of one of the links belonging to the aggregation group occurs.

It can be noted in particular how the method and the procedure described allow very easy adaptation to the possible changes in transmission capacity $C_i$ which may affect a link, this being advantageous in particular in the sector of physical radio links where the transmission capacity is often varied in an adaptive manner to the operating conditions and conditions of the transmission medium (air).

This is performed by communicating in advance the varied transmission capacity of each link to the aggregation manager, which may thus reprocess over time the optimum set of available links; the flows of containers thus distributed are never forwarded to a link where a change in configuration would result in the loss thereof, for example owing to the insufficient realignment capability of the receiving station.

Further advantageous aspects of the invention are obtained as follows:

- transmission/reception is transparent as regards the content of the flow from the network and therefore its internal structure and the protocols used which therefore do not need to be known to the transmission system;
- each link is supplied only with the amount of data which it is able to transport (depending on the contingent link configuration);
- compatibility of a set of combined links with the size of the receiving realignment buffer is always ensured, thereby avoiding rewriting in the buffer or preventing writing of a new container in the i-th position (slot) of the buffer occurring before the container previously written in the same position has been extracted from the buffer;
- any (temporary) variations in the capacity of any link, such as reductions due to rain in radio relay links, are simply managed by recalculating the set of links with maximum aggregate capacity, compatible with the realignment capability at the receiver, in advance of a change in modulation, or immediately in the event of a sudden change in state of the link from "available" to "alarmed".

The following embodiments are also understood as being included in the present description:

A manager device for a transmission station able to control the distribution of a digital flow on a set of physical links selected from among those belonging to a group comprising a plurality (N) of physical links ($L_i$) which connect the transmitting station (STX) and a receiving station (SRX) and which are combined in a single logic link between the transmitting station (STX) and the receiving station (SRX) having an aggregate capacity (TOT_CAP). characterized in that it comprises:

- a processing unit (310) for selecting a set of available links to be combined, which maximizes the aggregate capacity in a manner compatible with a realignment capability of the SRX station.

- input connections (301i) for receiving link state and/or configuration signals from a modulation/transmission apparatus mTXi of each link Li;
- at least one memory (320) comprising information which allows the values of suitable configuration parameters of a link to be obtained, by means of a link state and/or configuration signal received from a modulation/transmission apparatus mTXi of the said link;
- output connections (302i) for controlling the distribution of the containers on the $N_a$ links $L_i$ of the set of selected available links which determines the maximum aggregate capacity of the logic link, compatible with the realignment memory of the receiving station SRX.

Manager device according to the preceding embodiment, characterized in that said memory 320 comprises data for associating a respective link transmission capacity and link processing latency value with a link configuration identifier received.

A manager device according to either one of embodiments 8 or 9, characterized in that said processing unit is adapted to:

-) determine the links in an available state of the aggregation group;
-) determine the transmission capacity and processing latency values preannounced for each available link;
-) calculate the aggregate capacity of each possible combination of said available links;
-) calculate the minimum realignment capability necessary at the receiver SRX for each possible combination of available links;
-) select the combination of available links with minimum necessary realignment capacity compatible with the realignment capability of the receiver SRX, having maximum aggregate capacity.

Manager device according to the preceding embodiment, characterized in that the processing unit performs the calculation of the minimum realignment capability necessary at the receiving station SRX for a possible combination of available links:

- calculating, for each link of the combination, the time $T_i$ for transmission on the link of a container of size $ctnr_{size}$ from the transmitting station STX to the receiving station SRX, the calculation being performed on the basis of the link transmission capacity $C_i$ and the processing latency $r_i$;
- determining the transmission time $T_M$ on the available link with maximum transmission time of the combination of available links;

- determining the transmission time $T_m$ on the available link with minimum transmission time of the candidate combination of available links;
- calculating the minimum storage capacity $\Delta_{req}$ necessary at the receiving station GRX for realignment of the digital flow, as a function of said transmission times $T_M$ and $T_m$, of the number $N_a$ of links of the combination of physical links available and of the container size $ctnr_{size}$.

Manager device according to any one of the embodiments 8 to 11, characterized in that it is adapted to repeat the selection and the calculation of the set of available links with maximum aggregate capacity of the logic link, compatible with the realignment capability of the station SRX, in the event of reception of at least one signal indicating a variation in state and/or configuration from at least one link.

Manager device according to any one of the embodiments 8 to 12, wherein said state signals comprise an air loss and/or early warning signal received from a modulation/transmission apparatus mTXi of a radio link; and/or said change in configuration signal comprises a modem profile signal comprising an identifier of a future modulation profile, received from a modulation/transmission apparatus mTXi of a radio link, wherein an air loss and/or early warning signal indicates a deterioration in the performance of the radio link, which the aggregate capacity manager associates with a change in state of the link from "available" to "alarmed", and wherein a modem profile signal preannounces a change in the modulation profile, the aggregate capacity manager being set to recover from the memory 320 new transmission capacity and processing latency values of the link from the identifier of the announced modulation profile.

Manager device according to the preceding embodiment, wherein the processing unit immediately registers a change in state from "available" to "alarmed" for an i-th link when it receives an early warning and/or air loss signal indicating a deterioration of the link performance, and/or registers with a delay of a few milliseconds in the event of an improvement a change in state from "alarmed" to "available" when it receives an early warning and/or air loss signal indicating an improvement of the performance.

Although described in connection with a number of embodiments and a number of preferred examples of embodiment of the invention, it is understood that the scope of protection of the present patent is determined solely by the claims below.

**Claims**

1. Method for determining the minimum realignment capability $\Delta_{req}$ necessary at a receiving station SRX for realigning a digital flow ($F_{tx}$) packaged at a transmitting station STX in containers of size ctnr$_{size}$, and distributed on a set ($N_a$) of available physical links selected from among those belonging to a group comprising a plurality (N) of physical links ($L_i$) which connect the transmitting station (STX) and the receiving station (SRX) and to be combined in a single logic link between the two stations,

   - wherein a respective link transmission capacity $C_i$ and a respective link processing latency $r_i$ are associated with each available link ($L_i$);

   the method comprising the steps of:

   - calculating, for each available link, the time $T_i$ for transmission of a container of size ctnr$_{size}$ from the transmitting station STX to the receiving station SRX, the calculation being performed on the basis of the link transmission capacity $C_i$ and processing latency $r_i$;
   - determining the transmission time $T_M$ on the available link with maximum transmission time among the links of the set of selected available links;
   - determining the transmission time $T_m$ on the available link with minimum transmission time among the links of the set of selected available links;
   - calculating the minimum storage capability $\Delta_{req}$ necessary at the receiving station GRX for realignment of the digital flow, as a function of said transmission times $T_M$ and $T_m$, the number $N_a$ of links in the set of selected available physical links, and the size ctnr$_{size}$.

2. Method according to the preceding claim, wherein the transmission time $T_i$ of a container of size ctnr$_{size}$ on the i-th link ($L_i$) is calculated on the basis of the link transmission capacity $C_i$ and processing latency $r_i$ as follows:

$$T_i = [(K * cntr_{size}) / C_i] + r_i \,,$$

wherein K is an integer, preferably equal to 2; and wherein:

   - the transmission time $T_M$ on the available link with maximum transmission time of the set of available links is calculated as follows;

$$T_M = [(2 * cntr_{size})/C_M] + r_M = \max_i \{T_i\}$$

   - the transmission time $T_m$ on the available link with minimum transmission time of the set of available links is calculated as follows:

$$T_m = [(2 * cntr_{size})/C_m] + r_m = \min_i \{T_i\} \,.$$

3. Method according to the preceding claim, wherein the step of calculating the minimum realignment capability $\Delta_{req}$ necessary at the receiving station GRX for realignment of the digital flow is performed as follows:

$$\Delta_{req} = N_a + \frac{(T_M - T_m)}{cntr_{size}} \cdot \sum_i C_i$$

$$\Delta_{req} = N_a + \left( 2 \cdot \frac{C_m - C_M}{C_M \cdot C_m} + \frac{r_M - r_m}{cntr_{size}} \right) \cdot \sum_i C_i$$

wherein $N_a$ is the number of links of the set of selected available physical links.

4. Process for selecting a set of available physical links to be combined in a single logic link between a transmitting station (STX) and a receiving station (SRX), wherein the physical links are:

- selected from among those belonging to a group comprising a plurality (N) of physical links ($L_i$) which connect the two stations (STX,SRX), and
- such that, when combined in a single logic link between the two stations (STX,SRX), they determine an aggregate capacity of the logic link which is the maximum possible compatible with an assigned realignment capability of the receiving station SRX, comprising the steps of:

-) determining the links of the group which are in an available state;
-) determining the value of a future link transmission capacity and future link processing latency for each available link;
-) calculating the aggregate capacity of each possible combination of said available links;
-) determining a minimum realignment capability $\Delta_{req}$ necessary at the receiving station SRX for each possible combination of available links;
-) selecting the combination of available links with minimum necessary realignment capability $\Delta_{req}$ compatible with the realignment capability of the receiving station SRX, having maximum aggregate capacity;

wherein the minimum realignment capability $\Delta_{req}$ necessary at the receiving station SRX is determined with a method according to any one of Claims 1 to 3.

5. Process according to the preceding claim, **characterized in that** the step of determining the available links comprises checking for any change in state of each link of the group and/or the construction of a list of available links.

6. Process according to either one of Claims 4 and 5, **characterized in that** the step of determining the future transmission capacity and future processing latency of a link comprises:

- the reception and/or consultation of a preannounced configuration identifier from a modulation/transmission device mTX of a link; and
- recovery of corresponding link transmission capacity and processing latency values associated with a link configuration identified by the configuration identifier.

7. Process according to the preceding claim, wherein the preannounced configuration identifier is received with a signal sent by the modulation/transmission device mTX which preannounces a change in operating configuration of the link, the signal being sent and/or received in advance of the change in configuration such as to allow processing of a new set of available physical links with maximum aggregate capacity, compatible with the realignment capability of the receiving station SRX.

8. Process according to any one of Claims 4 to 7, wherein the value of the future link transmission capacity and/or future link processing latency is determined on the basis of the configuration identifier received, by accessing a memory in which link capacity and/or latency values associated with each configuration identifier of a link are stored.

9. Process according to any one of Claims 4 to 8, **characterized in that** the step of calculating the aggregate capacity and/or calculating the minimum realignment capability necessary at the receiving station SRX, for each possible combination of available links, comprises the steps of:

--) identifying all the possible combinations of available links;
--) calculating the aggregate capacity and/or the minimum realignment capability necessary for each combination identified.

**10.** Process according to any one of Claims 4 to 9, **characterized in that** the selection of the combination of links with maximum aggregate capacity, compatible with the realignment capability of the receiving station SRX, comprises:

--) evaluating the compatibility of each minimum realignment capability $\Delta_{req}$ necessary at the receiving station SRX calculated with the realignment capability of the receiving station SRX; and
--) comparing the aggregate capacities associated with all the combinations of links having a minimum realignment capability necessary at the receiving station SRX compatible with the realignment capability of the receiving station SRX.

**11.** Process according to any one of the preceding claims 4-10, **characterized in that** it is implemented by an aggregate capacity manager (300) of the transmitting station (STX) which has signal inputs for receiving state and/or configuration signals from the mTX apparatus of each link (Li) belonging to the aggregation group.

**12.** Process according to the preceding claim, **characterized in that** the manager reprocesses the set of available links with maximum aggregate capacity, compatible with the realignment capability of the receiving station SRX, whenever it receives a variation in state signal and/or a variation in configuration signal from at least one link of the group of physical links.

**13.** A manager device for a transmission station, comprising:

- a processing unit (310) configured for selecting, according to a process of any claim 4-12, a set of available physical links to be combined in a single logic link between a transmitting station (STX) and a receiving station (SRX) such that, when combined in the single logic link, they determine an aggregate capacity of the logic link which is the maximum possible compatible with an assigned realignment capability of the receiving station SRX;
- signal inputs for receiving state and/or configuration signals from the mTX apparatus of each link (Li) of a plurality (N) of physical links ($L_i$) which connect the two stations (STX,SRX).

**14.** Manager device according the preceding claim, **characterized in that** it is adapted to repeat the selection and the calculation of the set of available links with maximum aggregate capacity of the logic link, compatible with the realignment capability of the station SRX, in the event of reception of at least one signal indicating a variation in state and/or configuration from at least one link.

**15.** A programmable integrated circuit **characterized in that** it is configured to incorporate a manager device according to claim 13 or 14.

**Patentansprüche**

**1.** Verfahren zum Bestimmen der minimalen Ausrichtungsfähigkeit $\Delta_{req}$, die an einer Empfangsstation SRX zum Ausrichten eines Digitalflusses ($F_{tx}$) erforderlich ist, der an einer Sendestation STX in Container der Größe ctnr$_{size}$ gepackt wurde,
und über einen Satz ($N_a$) von verfügbaren physischen Verbindungen verteilt wurde, die aus denjenigen ausgewählt sind, die zu einer Gruppe gehören, die eine Vielzahl (N) von physischen Verbindungen ($L_i$) umfasst, die die Sendestation (STX) und die Empfangsstation (SRX) und die in einer einzelnen logischen Verbindung zwischen den zwei Stationen zu kombinieren sind verbinden,

- wobei eine jeweilige Verbindungs-Übertragungskapazität $C_i$ und eine jeweilige Verbindungs-Verarbeitungslatenz $r_i$ mit jeder verfügbaren Verbindung ($L_i$) verknüpft sind;

wobei das Verfahren die folgenden Schritte umfasst:

- Berechnen der Übertragungszeit $T_i$ eines Containers der Größe ctnr$_{size}$ von der Sendestation STX zu der Empfangsstation SRX für jede verfügbare Verbindung,
wobei die Berechnung auf der Grundlage der Verbindungs-Übertragungskapazität $C_i$ und der Verarbeitungslatenz $r_i$ durchgeführt wird;
- Bestimmen der Übertragungszeit $T_M$ auf der verfügbaren Verbindung mit maximaler Übertragungszeit aus den Verbindungen des Satzes von ausgewählten verfügbaren Verbindungen;
- Bestimmen der Übertragungszeit $T_m$ auf der verfügbaren Verbindung mit minimaler Übertragungszeit aus den Verbindungen des Satzes von ausgewählten verfügbaren Verbindungen;
- Berechnen der minimalen Speicherfähigkeit $\Delta_{req}$, die an der Empfangsstation GRX zum Ausrichten des Digitalflusses erforderlich ist, als eine Funktion der Übertragungszeiten $T_M$ und $T_m$, der Anzahl $N_a$ von Verbindungen in dem Satz ausgewählter verfügbarer physischer Verbindungen und der Größe $ctnr_{size}$.

**2.** Verfahren nach dem vorhergehenden Anspruch, wobei die Übertragungszeit $T_i$ eines Containers der Größe $ctnr_{size}$ auf der i-ten Verbindung ($L_i$) auf der Grundlage der Verbindungs-Übertragungskapazität $C_i$ und der Verarbeitungslatenz $r_i$ wie folgt berechnet wird:

$$T_i = [ (K * ctnr_{size}) / C_i] + r_i,$$

wobei K eine ganze Zahl ist, vorzugsweise gleich 2;
und wobei:

- die Übertragungszeit $T_M$ auf der verfügbaren Verbindung mit maximaler Übertragungszeit aus dem Satz von verfügbaren Verbindungen wie folgt berechnet wird;

$$T_M = [ (2 * ctnr_{size}) / C_M] + r_M = \max_i\{T_i\}$$

- die Übertragungszeit $T_m$ auf der verfügbaren Verbindung mit minimaler Übertragungszeit aus dem Satz von verfügbaren Verbindungen wie folgt berechnet wird;

$$T_m = [ (2 * ctnr_{size}) / C_m] + r_m = \min_i\{T_i\}$$

**3.** Verfahren nach dem vorhergehenden Anspruch, wobei der Schritt des Berechnens der minimalen Ausrichtungsfähigkeit $\Delta_{req}$, die an der Empfangsstation GRX zum Ausrichten des Digitalflusses erforderlich ist, wie folgt durchgeführt wird:

$$\Delta_{req} = N_a + \frac{(T_M - T_m)}{cntr_{size}} \cdot \sum_i C_i$$

$$\Delta_{req} = N_a + \left( 2 \cdot \frac{C_m - C_M}{C_M \cdot C_m} + \frac{r_M - r_m}{cntr_{size}} \right) \cdot \sum_i C_i$$

wobei $N_a$ die Anzahl von Verbindungen des Satzes von ausgewählten verfügbaren physischen Verbindungen ist.

**4.** Prozess zum Auswählen eines Satzes verfügbarer physischer Verbindungen, die in einer einzelnen logischen Verbindung zwischen einer Sendestation (STX) und einer Empfangsstation (SRX) zu kombinieren sind, wobei die physischen Verbindungen:

- aus denjenigen ausgewählt sind, die zu einer Gruppe gehören, die eine Vielzahl (N) von physischen Verbindungen ($L_i$) umfasst, die die beiden Stationen (STX, SRX) verbinden und
- wenn diese in einer einzelnen logischen Verbindung zwischen den zwei Stationen (STX, SRX) kombiniert sind, diese derart ausgebildet sind, dass sie eine Gesamtkapazität der logischen Verbindung bestimmen, die das mögliche Maximum ist, das mit einer zugewiesenen Ausrichtungsfähigkeit der Empfangsstation SRX kompatibel ist,

umfassend die Schritte:

-) Bestimmen der Verbindungen der Gruppe, die sich in einem verfügbaren Zustand befinden;
-) Bestimmen des Wertes einer zukünftigen Verbindungs-Übertragungskapazität und einer zukünftigen Verbindungs-Verarbeitungslatenz für jede verfügbare Verbindung;
-) Berechnen der Gesamtkapazität jeder möglichen Kombination der verfügbaren Verbindungen;
-) Bestimmen einer minimalen Ausrichtungsfähigkeit $\Delta_{req}$, die an der Empfangsstation SRX erforderlich ist, für jede mögliche Kombination verfügbarer Verbindungen;
-) Auswählen der Kombination von verfügbaren Verbindungen mit minimaler erforderlicher Ausrichtungsfähigkeit $\Delta_{req}$, die mit der Ausrichtungsfähigkeit der Empfangsstation SRX kompatibel ist, mit maximaler Gesamtkapazität,

wobei die minimale, an der Empfangsstation SRX erforderliche Ausrichtungsfähigkeit $\Delta_{req}$, mit einem Verfahren nach einem der Ansprüche 1 bis 3 bestimmt wird.

5. Prozess nach dem vorhergehenden Anspruch, **dadurch gekennzeichnet, dass** der Schritt des Bestimmens der verfügbaren Verbindungen ein Prüfen auf eine Änderung des Zustands jeder Verbindung der Gruppe und/oder den Aufbau einer Liste verfügbarer Verbindungen umfasst.

6. Prozess nach einem der Ansprüche 4 und 5, **dadurch gekennzeichnet, dass** der Schritt des Bestimmens der zukünftigen Übertragungskapazität und zukünftigen Verarbeitungslatenz einer Verbindung umfasst:

   - das Empfangen und/oder Hinzuziehen eines vorab angekündigten Konfigurationsidentifikators von einer Modulations-/Übertragungsvorrichtung mTX einer Verbindung; und
   - das Wiederherstellen entsprechender Verbindungs-Übertragungskapazitäts- und Verarbeitungslatenzwerte, die mit einer Verbindungskonfiguration, die durch den Konfigurationsidentifikator identifiziert wird, verknüpft sind.

7. Prozess nach dem vorhergehenden Anspruch, wobei der vorab angekündigte Konfigurationsidentifikator mit einem von der Modulations-/Übertragungsvorrichtung mTX gesendeten Signal empfangen wird, das eine Betriebskonfigurationsänderung der Verbindung vorab ankündigt, wobei das Signal vor der Konfigurationsänderung gesendet und/oder empfangen wird, um die Verarbeitung eines neuen Satzes verfügbarer physischer Verbindungen mit maximaler Gesamtkapazität zu gestatten, die mit der Ausrichtungsfähigkeit der Empfangsstation SRX kompatibel ist.

8. Prozess nach einem der Ansprüche 4 bis 7, wobei der Wert der zukünftigen Verbindungs-Übertragungskapazität und / oder der zukünftigen Verbindungs-Verarbeitungslatenz auf der Basis des empfangenen Konfigurationsidentifikators bestimmt wird, indem auf einen Speicher zugegriffen wird, in dem die Verbindungskapazität und / oder Latenzwerte, die mit jedem Konfigurationsidentifikator einer Verbindung verknüpft sind, gespeichert sind.

9. Prozess nach einem der Ansprüche 4 bis 8, **dadurch gekennzeichnet, dass** der Schritt des Berechnens der Gesamtkapazität und / oder des Berechnens der minimalen Ausrichtungsfähigkeit, die an der Empfangsstation SRX erforderlich ist, für jede mögliche Kombination von verfügbaren Verbindungen die folgenden Schritte umfasst:

   --) Identifizieren aller möglichen Kombinationen von verfügbaren Verbindungen;
   --) Berechnung der Gesamtkapazität und / oder der minimalen Ausrichtungsfähigkeit, die für jede identifizierte Kombination erforderlich ist.

10. Prozess nach einem der Ansprüche 4 bis 9, **dadurch gekennzeichnet, dass** die Auswahl der Kombination von Verbindungen mit maximaler Gesamtkapazität, die mit der Ausrichtungsfähigkeit der Empfangsstation SRX kompatibel ist, umfasst:

   --) Bewerten der Kompatibilität jeder minimalen, an der Empfangsstation SRX erforderlichen Ausrichtungsfähigkeit $\Delta_{req}$, die mit der Ausrichtungsfähigkeit der Empfangsstation SRX berechnet ist; und
   --) Vergleichen der Gesamtkapazitäten, die mit allen Kombinationen von Verbindungen verknüpft sind, die eine minimale Ausrichtungsfähigkeit aufweisen, die an der Empfangsstation SRX erforderlich ist und die mit der Ausrichtungsfähigkeit der Empfangsstation SRX kompatibel ist.

11. Prozess nach einem der vorhergehenden Ansprüche 4 - 10, **dadurch gekennzeichnet, dass** er durch einen Gesamtkapazitätsmanager (300) der Sendestation (STX) implementiert ist, der Signaleingänge zum Empfangen von Zustands- und / oder Konfigurationssignalen von der mTX-Einrichtung von jeder Verbindung aufweist (Li), die zu der Aggregationsgruppe gehört.

12. Prozess nach dem vorhergehenden Anspruch, **dadurch gekennzeichnet, dass** der Manager den Satz verfügbarer Verbindungen mit maximaler Gesamtkapazität, die mit der Ausrichtungsfähigkeit der Empfangsstation SRX kompatibel ist, immer dann erneut verarbeitet, wenn er eine Veränderung eines Zustandssignals und/oder eine Veränderung eines Konfigurationssignals von mindestens einer Verbindung der Gruppe physischer Verbindungen empfängt.

13. Managervorrichtung für eine Übertragungsstation, umfassend:

- eine Verarbeitungseinheit (310) die eingerichtet ist zum Auswählen, gemäß eines Prozesses nach einem der Ansprüche 4 - 12, eines Satzes von verfügbaren physischen Verbindungen, die in einer einzelnen logischen Verbindung zwischen einer Sendestation (STX) und einer Empfangsstation (SRX) derart zu kombinieren sind, dass sie, wenn sie in der einzelnen logischen Verbindung kombiniert sind, eine Gesamtkapazität der logischen Verbindung bestimmen, die das mögliche Maximum ist, das mit einer zugewiesenen Ausrichtungsfähigkeit der Empfangsstation SRX kompatibel ist;
- Signaleingänge zum Empfangen von Zustands- und / oder Konfigurationssignalen von der mTX-Einrichtung von jeder Verbindung (Li) einer Vielzahl (N) von physischen Verbindungen ($L_i$), die die beiden Stationen (STX, SRX) verbinden.

14. Managervorrichtung nach dem vorhergehenden Anspruch, **dadurch gekennzeichnet, dass** sie eingerichtet ist, die Auswahl und die Berechnung des Satzes von verfügbaren Verbindungen mit maximaler Gesamtkapazität der logischen Verbindung, die mit der Ausrichtungsfähigkeit der Station SRX kompatibel ist, zu wiederholen, in dem Fall des Erhalts von wenigstens einem Signal, das eine Veränderung eines Zustands und/oder einer Konfiguration von mindestens einer Verbindung anzeigt.

15. Programmierbarer integrierter Schaltkreis, **dadurch gekennzeichnet, dass** er eingerichtet ist eine Managervorrichtung nach Anspruch 13 oder 14 zu beinhalten.

**Revendications**

1. Procédé de détermination de la capacité de réalignement minimale $\Delta_{req}$ nécessaire au niveau d'une station de réception SRX pour réaligner un flux numérique ($F_{tx}$) mis en paquets au niveau d'une station de transmission STX dans des conteneurs de taille $cntr_{size}$, et distribué sur un ensemble ($N_a$) de liaisons physiques disponibles sélectionnées parmi des liaisons appartenant à un groupe comprenant une pluralité (N) de liaisons physiques ($L_i$) qui connectent la station de transmission (STX) et la station de réception (SRX) et devant être combinées en une unique liaison logique entre les deux stations,

- dans lequel une capacité $C_i$ de transmission de liaison respective et une latence $r_i$ de traitement de liaison respective sont associées à chaque liaison disponible ($L_i$) ;

le procédé comprenant les étapes consistant à :

- calculer, pour chaque liaison disponible, le temps $T_i$ de transmission d'un conteneur de taille $cntr_{size}$ de la station de transmission STX à la station de réception SRX, le calcul étant effectué sur la base de la capacité $C_i$ de transmission et de la latence $r_i$ de traitement de liaison ;
- déterminer le temps de transmission $T_M$ sur la liaison disponible ayant un temps de transmission maximal entre les liaisons de l'ensemble de liaisons disponibles sélectionnées ;
- déterminer le temps de transmission $T_m$ sur la liaison disponible ayant un temps de transmission minimal entre les liaisons de l'ensemble de liaisons disponibles sélectionnées ;
- calculer la capacité de stockage minimale $\Delta_{req}$ nécessaire au niveau de la station de réception GRX pour réaligner le flux numérique, en fonction desdits temps de transmission $T_M$ et $T_m$, du nombre $N_a$ de liaisons de l'ensemble de liaisons physiques disponibles sélectionnées et de la taille $cntr_{size}$.

2. Procédé selon la revendication précédente, dans lequel le temps de transmission $T_i$ d'un conteneur de taille $cntr_{size}$ sur la i-ème liaison ($L_i$) est calculé sur la base de la capacité $C_i$ de transmission et de la latence $r_i$ de traitement de liaison de la manière suivante :

$$T_i = [(K * cntr_{size}) / C_i] + r_i,$$

où K est un nombre entier, de préférence égal à 2 ;
et dans lequel :

- le temps de transmission $T_M$ sur la liaison disponible ayant un temps de transmission maximal de l'ensemble de liaisons disponibles est calculé de la manière suivante ;

$$T_M = [(2^* cntr_{size})/C_M] + r_M = \max_i \{T_i\}$$

- le temps de transmission $T_m$ sur la liaison disponible ayant un temps de transmission minimal de l'ensemble de liaisons disponibles est calculé de la manière suivante :

$$T_m = [(2^* cntr_{size})/C_m] + r_m = \min_i \{T_i\}$$

3. Procédé selon la revendication précédente, dans lequel l'étape de calcul de la capacité de réalignement minimale $\Delta_{req}$ nécessaire au niveau de la station de réception GRX pour réaligner le flux numérique est effectuée de la manière suivante :

$$\Delta_{req} = N_a + \frac{(T_M - T_m)}{cntr_{size}} * \sum_i C_i$$

$$\Delta_{req} = N_a + \left(2 * \frac{C_m - C_M}{C_M * C_m} + \frac{r_M - r_m}{cntr_{size}}\right) * \sum_i C_i$$

où $N_a$ est le nombre de liaisons de l'ensemble de liaisons physiques disponibles sélectionnées.

4. Procédé de sélection d'un ensemble de liaisons physiques disponibles devant être combinées en une unique liaison logique entre une station de transmission (STX) et une station de réception (SRX),
dans lequel les liaisons physiques sont :

- sélectionnées parmi les liaisons appartenant à un groupe comprenant une pluralité (N) de liaisons physiques ($L_i$) qui connectent les deux stations (STX, SRX), et
- de sorte que, lorsqu'elles sont combinées en une unique liaison logique entre les deux stations (STX, SRX), elles déterminent une capacité d'agrégat de la liaison logique qui correspond au maximum possible compatible avec une capacité de réalignement attribuée de la station de réception SRX,

comprenant les étapes consistant à :

-) déterminer les liaisons du groupe qui sont dans un état disponible ;
-) déterminer la valeur d'une future capacité de transmission de liaison et d'une future latence de traitement de liaison pour chaque liaison disponible ;
-) calculer la capacité d'agrégat de chaque combinaison possible desdites liaisons disponibles ;
-) déterminer une capacité de réalignement minimale $\Delta_{req}$ nécessaire au niveau de la station de réception SRX pour chaque combinaison possible de liaisons disponibles ;
-) sélectionner la combinaison de liaisons disponibles ayant la capacité de réalignement minimale $\Delta_{req}$ nécessaire compatible avec la capacité de réalignement de la station de réception SRX, ayant une capacité d'agrégat maximale ;

dans lequel la capacité de réalignement minimale $\Delta_{req}$ nécessaire au niveau de la station de réception SRX est déterminée au moyen d'un procédé selon l'une quelconque des revendications 1 à 3.

**5.** Procédé selon la revendication précédente, **caractérisé en ce que** l'étape de détermination des liaisons disponibles consiste à vérifier un quelconque changement d'état de chaque liaison du groupe et/ou de la construction d'une liste de liaisons disponibles.

**6.** Procédé selon l'une ou l'autre des revendications 4 et 5, **caractérisé en ce que** l'étape de détermination de la future capacité de transmission et de la future latence de traitement d'une liaison consiste à :

- recevoir un identificateur de configuration préannoncé d'un dispositif de modulation/transmission mTX d'une liaison, et/ou consulter ce dernier ; et
- restaurer des valeurs de capacité de transmission et de latence de traitement de liaison correspondantes associées à une configuration de liaison identifiée par l'identificateur de configuration.

**7.** Procédé selon la revendication précédente, dans lequel l'identificateur de configuration préannoncé est reçu avec un signal envoyé par le dispositif de modulation/transmission mTX qui préannonce un changement de configuration d'exploitation de la liaison, le signal étant envoyé et/ou reçu préalablement au changement de configuration de façon à permettre un traitement d'un nouvel ensemble de liaisons physiques disponibles ayant une capacité d'agrégat maximale, compatible avec la capacité de réalignement de la station de réception SRX.

**8.** Procédé selon l'une quelconque des revendications 4 à 7, dans lequel les valeurs de la future capacité de transmission de liaison et/ou de la future latence de traitement de liaison sont déterminées sur la base de l'identificateur de configuration reçu, par accès à une mémoire dans laquelle sont stockées des valeurs de capacité et/ou de latence de liaison associées à chaque identificateur de configuration d'une liaison.

**9.** Procédé selon l'une quelconque des revendications 4 à 8, **caractérisé en ce que** l'étape de calcul de la capacité d'agrégat et/ou de calcul de la capacité de réalignement minimale nécessaires au niveau de la station de réception SRX, pour chaque combinaison possible de liaisons disponibles, comprend les étapes consistant à :

--) identifier toutes les combinaisons possibles de liaisons disponibles ;
--) calculer la capacité d'agrégat et/ou la capacité de réalignement minimale nécessaire pour chaque combinaison identifiée.

**10.** Procédé selon l'une quelconque des revendications 4 à 9, **caractérisé en ce que** la sélection de la combinaison de liaisons ayant une capacité d'agrégat maximale, compatible avec la capacité de réalignement de la station de réception SRX, consiste à :

--) évaluer la compatibilité de chaque capacité de réalignement minimale $\Delta_{req}$ nécessaire au niveau de la station de réception SRX calculée avec la capacité de réalignement de la station de réception SRX ; et
--) comparer les capacités d'agrégat associées à toutes les combinaisons de liaisons ayant une capacité de réalignement minimale nécessaire au niveau de la station de réception SRX compatible avec la capacité de réalignement de la station de réception SRX.

**11.** Procédé selon l'une quelconque des revendications 4 à 10, **caractérisé en ce que** ledit procédé est mis en oeuvre par un gestionnaire de capacité d'agrégat (300) de la station de transmission (STX) qui comporte des entrées de signaux permettant de recevoir des signaux d'état et/ou de configuration de l'appareil mTX de chaque liaison ($L_i$) appartenant au groupe d'agrégation.

**12.** Procédé selon la revendication précédente, **caractérisé en ce que** le gestionnaire retraite l'ensemble de liaisons disponibles ayant une capacité d'agrégat maximale, compatible avec la capacité de réalignement de la station de réception SRX, à chaque fois que ce dernier reçoit une variation de signal d'état et/ou une variation de signal de configuration d'au moins une liaison du groupe de liaisons physiques.

**13.** Dispositif gestionnaire de station de transmission, comprenant :

- une unité de traitement (310) configurée pour sélectionner, conformément à un procédé selon l'une quelconque des revendications 4 à 12, un ensemble de liaisons physiques disponibles devant être combinées en une unique liaison logique entre une station de transmission (STX) et une station de réception (SRX) de sorte que, lorsqu'elles sont combinées en l'unique liaison logique, elles déterminent une capacité d'agrégat de la liaison logique qui correspond au maximum possible compatible avec une capacité de réalignement attribuée de la station de réception SRX ;
- des entrées de signaux permettant de recevoir des signaux d'état et/ou de configuration de l'appareil mTX de chaque liaison ($L_i$) d'une pluralité (N) de liaisons physiques ($L_i$) qui connectent les deux stations (STX, SRX).

14. Dispositif gestionnaire selon la revendication précédente, **caractérisé en ce que** ledit dispositif est apte à répéter la sélection et le calcul de l'ensemble de liaisons disponibles ayant une capacité d'agrégat maximale de la liaison logique, compatible avec la capacité de réalignement de la station SRX, dans l'éventualité d'une réception d'au moins un signal représentant une variation d'état et/ou de configuration d'au moins une liaison.

15. Circuit intégré programmable, **caractérisé en ce qu'**il est configuré pour incorporer un dispositif gestionnaire selon la revendication 13 ou 14.

Fig. 1

Fig. 2

Fig.3

container TX,1

buffer 1 full

SHAPER 1

capacity 1

radio signaling 1

LOAD BALANCER

container TX

container TX,i

SHAPER$_i$

buffer full i

$302_i$

$301_1$

300

$304_1$

AGGREGATE
CAPACITY
MANAGER

capacity i

$304_i$

310

radio signaling i

$301_i$

read

CPU

write

LINK PARAMETERS RAM

300

320

MULT

Uplink buffer full$_j$

CSi

STOP TX

STOP TX

AGGREGATE

Early Warning$_j$

CAPACITY

Air Loss$_j$

MANAGER

Modem Profile$_j$

Link capacity$_j$

300

read

RAM
CAPACITY LATENCY

320

Fig.5

*Fig.4*

AM-START

START

AM-10Y

AM-10

Is any of the
selected links in
alarm state?

YES

AM-10N

NO

AM-10Y1

AM-12

NO

Has the configuration of any
available link changed? OR

Has the status of any link in
changed?

AM-10N1

YES

Remove the alarmed
link(s) from the selected
links group

AM-121

Start computing the new maximum total capacity selected links group.
Initialization:

AM-12a — next_selected_links_group ← *none*
AM-12b — next_total_capacity ← 0
i ← 0

Prepare a list of all the possible link groups using only the M available links:
candidate_selected_links_group(i)   ,   $0 \le i < 2^M$

current_candidate_selected_links_group ← candidate_selected_links_group(i)

AM-122

AM-12c

AM-123

For current candidate sleected links group   compute:
• required remote realignment buffer size REQ_BUFF
• total capacity TOT_CAP

*Fig.4*

EP 3 131 220 B1

*Fig. 6*

Fig. 7

**EP 3 131 220 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2416535 A